# EUROPEAN PATENT APPLICATION

(11) **EP 4 254 400 A1**
(43) Date of publication of application: **04.10.2023**
(21) Application number: 21914086.0
(22) Date of filing: 22.12.2021
(51) Int. Cl.: G10L 15/22, G10L 15/26, G10L 15/06, G06F 16/9535, G06F 16/9035, G06F 16/9032

(54) **METHOD AND DEVICE FOR DETERMINING USER INTENT**

(30) Priority: 31.12.2020 CN 202011628131
(71) Applicant: Huawei Technologies Co., Ltd., Shenzhen, Guangdong 518129 (CN)
(72) Inventor: HUANG, Yigui, Shenzhen, Guangdong 518129 (CN); QIAO, Denglong, Shenzhen, Guangdong 518129 (CN); XIA, Panbin, Shenzhen, Guangdong 518129 (CN)
(74) Representative: Huawei European IPR
(86) International application number: PCT/CN2021/140555
(87) International publication number: WO 2022/143349

(57) **Abstract**

This application provides a method and an apparatus for determining a user intention, and relates to a natural language understanding technology in the field of artificial intelligence. The method for determining a user intention includes: obtaining a speech text corresponding to a speech signal (S501); separately inputting the speech text to at least one reference intention recognition model and at least one third-party intention recognition model, outputting a first intention set by using the at least one reference intention recognition model, and outputting a second intention set by using the at least one third-party intention recognition model (S503), where the third-party intention recognition model is set to be obtained through training based on the reference intention recognition model of a same skill category and model training data of the reference intention recognition model; and determining an intention of the speech text based on a confidence level of an intention in the first intention set and a confidence level of an intention in the second intention set (S505).

## Description

This application claims priority to Chinese Patent Application No. 202011628131.6, filed with the China National Intellectual Property Administration on December 31, 2020 and entitled "METHOD AND APPARATUS FOR DETERMINING USER INTENTION", which is incorporated herein by reference in its entirety.

### TECHNICAL FIELD

This application relates to the field of artificial intelligence speech interaction technologies, and in particular, to a method and an apparatus for determining a user intention.

### BACKGROUND

In recent years, an intelligent speech interaction (Intelligent Speech Interaction) technology has been rapidly developed. The intelligent speech interaction technology is based on technologies such as speech recognition, speech synthesis, and natural language understanding, and can provide intelligent man-machine interaction experience indicating that a product can listen, speak, and understand to users in various actual application scenarios.

Currently, an intelligent speech interaction platform usually needs to cooperate with a plurality of third-party platforms to provide rich speech skills to users. Typically, the third-party platforms for cooperation mainly include a merchant, a music broadcast platform, a weather information platform, and the like. There are a large quantity of third-party platforms and many third-party platforms are of a same type. Therefore, it is very important to accurately identify a specific skill of a specific platform that the user wants to trigger. Usually, the intelligent speech interaction platform provides only a skill with a skill wakeup word to the third-party platform, and the skill can be recalled by using only the clear skill wakeup word carried in a speech text of the user. In an example, it may be set that a skill wakeup word for playing music is "play music". In this case, if the user wants to listen to a song, the user needs to first say the skill wakeup word "play music" and then say a name of the song. The intelligent speech interaction platform involves a large quantity of speech skills. Therefore, in the manner of waking up a skill by using a skill wakeup word, there is a high requirement on the user, and it is impossible for the user to remember an excessively large quantity of skill wakeup words. Further, triggering a speech skill without a skill wakeup word becomes a speech interaction manner popular with users. The triggering a speech skill without a skill wakeup word is triggering the speech skill without saying the skill wakeup word. For example, in the foregoing example, the user does not need to first say the skill wakeup word "play music", and the user may directly say "play XY" (XY is the name of the song) to trigger the skill of playing music. In a related technology, the intelligent speech interaction platform usually may develop a plurality of preset intentions, and these preset intentions usually cannot be modified. If the third-party platform supports one or more preset intentions, the corresponding preset intentions may be referenced. In this way, when speech of the user hits one of the preset intentions, and the preset intention corresponds to speech skills of a plurality of third-party platforms, a specific third-party platform whose speech skill is to be used may be confirmed to the user. In the manner in the related technology, the third-party platform can only reference the preset intention defined by the intelligent speech interaction platform, but cannot extend the existing preset intention, resulting in poor extensibility.

Therefore, a manner in which a customized speech intention with good extensibility can be provided to the third-party platform is urgently needed in the related technology.

### SUMMARY

In view of this, a method and an apparatus for determining a user intention are provided.

According to a first aspect, an embodiment of this application provides a method for determining a user intention.

According to the first aspect, in a first possible implementation, the method includes:
obtaining a speech text corresponding to a speech signal;
separately inputting the speech text to at least one reference intention recognition model and at least one third-party intention recognition model, outputting a first intention set by using the at least one reference intention recognition model, and outputting a second intention set by using the at least one third-party intention recognition model, where the third-party intention recognition model is obtained through training based on the reference intention recognition model of a same skill category and model training data of the reference intention recognition model; and
determining an intention of the speech text based on a confidence level of an intention in the first intention set and a confidence level of an intention in the second intention set.

According to the method for determining a user intention provided in embodiments of this application, the speech text of a user can be recognized by using the at least one reference intention recognition model and the at least one third-party intention recognition model. The third-party intention recognition model is set to be obtained through training based on the reference intention recognition model of the same skill category and the model training data of the reference intention recognition model. Therefore, it may be learned that in this embodiment of this application, a condition for training an intention recognition model may be provided to a third-party user, and the third-party user may obtain an intention recognition model that belongs to the third-party user through training based on a reference intention recognition model of a preset skill category, to enhance extensibility of a customized intention of the third-party user. In addition, from a perspective of the user, recognizing the speech text of the user by using a plurality of intention recognition models can help the user recall an intention with high accuracy, and optimize user experience.

According to the first possible implementation of the first aspect, the third-party intention recognition model is obtained through training in the following manner:
obtaining a reference intention recognition model of a preset skill category and model training data of the reference intention recognition model, where the model training data includes at least a plurality of preset intentions and reference sample data and reference model parameters respectively corresponding to the plurality of preset intentions;
obtaining third-party sample data that matches the preset skill category; and
training the reference intention recognition model by using the model training data and the third-party sample data, to generate the third-party intention recognition model.

This embodiment provides a specific manner of obtaining the third-party intention recognition model through training. The third-party intention recognition model is obtained through development based on the original reference intention recognition model. In this way, the third-party intention recognition model can be prevented from polluting the intention in the reference intention recognition model, and difficulty of intention development by the third party can be reduced and a parsing capability of the third-party intention recognition model can be improved as training and development are performed based on a mature reference intention recognition model.

According to a second possible implementation of the first aspect, the obtaining third-party sample data that matches the preset skill category includes:
obtaining a third-party intention added by a third-party user and third-party sample data corresponding to the third-party intention, where the third-party intention matches the preset skill category; or
obtaining sample data added by a third-party user on the basis of the reference sample data corresponding to the preset intention.

This embodiment provides a manner in which the third-party user may provide the sample data. The third-party user may add the third-party intention, and the third-party user may add the sample data of the existing intention. Therefore, it may be learned that the third-party user may not only extend the intention, but also enrich the sample data of the existing intention, so that the third-party intention recognition model obtained through training has more service features of the third-party user.

According to a third possible implementation of the first aspect, the training the reference intention recognition model by using the model training data and the third-party sample data, to generate the third-party intention recognition model includes:
obtaining a user identifier of a third-party user;
associating the user identifier with the third-party sample data; and
training the reference intention recognition model by using the model training data and the third-party sample data associated with the user identifier, to generate the third-party intention recognition model.

In this embodiment of this application, the user identifier of the third-party user may be uniformly substituted into the sample data for training. The user identifier is substituted into a training process to adapt to a habit of preferring to use a user identifier of a merchant in a speech instruction by the user. In addition, a case in which information redundancy is increased because the user identifier is added to each piece of third-party sample data provided by the third-party user is avoided.

According to a fourth possible implementation of the first aspect, the user identifier includes at least one of a brand name, an app name, and a product name corresponding to the third-party user.

This embodiment of this application provides a plurality of possible user identifiers.

According to a fifth possible implementation of the first aspect, the determining an intention of the speech text based on a confidence level of an intention in the first intention set and a confidence level of an intention in the second intention set includes:
using an intention with a highest confidence level in the second intention set as the intention of the speech text when it is determined that confidence levels of all intentions included in the first intention set are less than or equal to a first preset threshold, and confidence levels of all intentions included in the second intention set are greater than a second preset threshold;
using an intention with a highest confidence level in the first intention set as the intention of the speech text when it is determined that confidence levels of all intentions included in the second intention set are less than or equal to a second preset threshold; or
using an intention with a highest confidence level in the first intention set and the second intention set as the intention of the speech text when it is determined that confidence levels of all intentions included in the first intention set are greater than or equal to a first preset threshold, and confidence levels of all intentions included in the second intention set are greater than a second preset threshold.

This embodiment of this application provides a plurality of manners of determining a user intention, to increase a recall rate of intention recognition.

According to a sixth possible implementation of the first aspect, each of the first preset threshold and the second preset threshold is set to match a corresponding skill category.

In this embodiment, different skill categories may be respectively set to correspond to respective confidence level thresholds, so as to adapt to confidence level features corresponding to the different skill categories.

According to a second aspect, an embodiment of this application provides a method for generating an intention recognition model.

According to the second aspect, in a first possible implementation, the method includes:
obtaining a preset skill category selected by a third-party user;
obtaining a reference intention recognition model corresponding to the preset skill category and model training data of the reference intention recognition model;
obtaining third-party sample data that is from the third-party user and that matches the preset skill category; and
training the reference intention recognition model by using the model training data and the third-party sample data, to generate a third-party intention recognition model, where the third-party intention recognition model is an intention recognition model corresponding to the third-party user.

According to the first possible implementation of the second aspect, the obtaining third-party sample data that matches the preset skill category includes:
obtaining a third-party intention added by the third-party user and third-party sample data corresponding to the third-party intention, where the third-party intention matches the preset skill category; or
obtaining sample data added by the third-party user on the basis of reference sample data corresponding to a preset intention.

According to a second possible implementation of the second aspect, the training the reference intention recognition model by using the model training data and the third-party sample data, to generate a third-party intention recognition model includes:
obtaining a user identifier of the third-party user;
associating the user identifier with the third-party sample data; and
training the reference intention recognition model by using the model training data and the third-party sample data associated with the user identifier, to generate the third-party intention recognition model.

According to a third possible implementation of the second aspect, the user identifier includes at least one of a brand name, an app name, and a product name corresponding to the third-party user.

According to a fourth possible implementation of the second aspect, after the generating a third-party intention recognition model, the method further includes:
obtaining a speech text corresponding to a speech signal;
separately inputting the speech text to at least one reference intention recognition model and at least one third-party intention recognition model, outputting a first intention set by using the at least one reference intention recognition model, and outputting a second intention set by using the at least one third-party intention recognition model; and
determining an intention of the speech text based on a confidence level of an intention in the first intention set and a confidence level of an intention in the second intention set.

According to a third aspect, an embodiment of this application provides an apparatus or a system for determining a user intention.

According to the third aspect, in a first possible implementation, the apparatus or the system (the system may be a software platform, for example, an open platform described below) may include:
a speech recognition module, configured to obtain a speech text corresponding to a speech signal; and
a dialog management module, configured to: separately input the speech text to at least one reference intention recognition model and at least one third-party intention recognition model, output a first intention set by using the at least one reference intention recognition model, and output a second intention set by using the at least one third-party intention recognition model, where the third-party intention recognition model is obtained through training based on the reference intention recognition model of a same skill category and model training data of the reference intention recognition model; and configured to determine an intention of the speech text based on a confidence level of an intention in the first intention set and a confidence level of an intention in the second intention set.

According to the first possible implementation of the third aspect, the third-party intention recognition model is obtained through training in the following manner:
obtaining a reference intention recognition model of a preset skill category and model training data of the reference intention recognition model, where the model training data includes at least a plurality of preset intentions and reference sample data and reference model parameters respectively corresponding to the plurality of preset intentions;
obtaining third-party sample data that matches the preset skill category; and
training the reference intention recognition model by using the model training data and the third-party sample data, to generate the third-party intention recognition model.

According to a second possible implementation of the third aspect, the obtaining third-party sample data that matches the preset skill category includes:
obtaining a third-party intention added by a third-party user and third-party sample data corresponding to the third-party intention, where the third-party intention matches the preset skill category; or
obtaining sample data added by a third-party user on the basis of the reference sample data corresponding to the preset intention.

According to a third possible implementation of the third aspect, the training the reference intention recognition model by using the model training data and the third-party sample data, to generate the third-party intention recognition model includes:
obtaining a user identifier of a third-party user;
associating the user identifier with the third-party sample data; and
training the reference intention recognition model by using the model training data and the third-party sample data associated with the user identifier, to generate the third-party intention recognition model.

According to a fourth possible implementation of the third aspect, the user identifier includes at least one of a brand name, an app name, and a product name corresponding to the third-party user.

According to a fifth possible implementation of the third aspect, the determining an intention of the speech text based on a confidence level of an intention in the first intention set and a confidence level of an intention in the second intention set includes:
using an intention with a highest confidence level in the second intention set as the intention of the speech text when it is determined that confidence levels of all intentions included in the first intention set are less than or equal to a first preset threshold, and confidence levels of all intentions included in the second intention set are greater than a second preset threshold;
using an intention with a highest confidence level in the first intention set as the intention of the speech text when it is determined that confidence levels of all intentions included in the second intention set are less than or equal to a second preset threshold; or
using an intention with a highest confidence level in the first intention set and the second intention set as the intention of the speech text when it is determined that confidence levels of all intentions included in the first intention set are greater than or equal to a first preset threshold, and confidence levels of all intentions included in the second intention set are greater than a second preset threshold.

According to a sixth possible implementation of the third aspect, each of the first preset threshold and the second preset threshold is set to match a corresponding skill category.

According to a fourth aspect, an embodiment of this application provides an apparatus or a system (the system may be a software system) for generating an intention recognition model.

According to the fourth aspect, in a first possible implementation, the apparatus or the system includes:
a skill category obtaining module, configured to obtain a preset skill category selected by a third-party user;
a model obtaining module, configured to obtain a reference intention recognition model corresponding to the preset skill category and model training data of the reference intention recognition model;
a sample obtaining module, configured to obtain third-party sample data that is from the third-party user and that matches the preset skill category; and
a model generation module, configured to train the reference intention recognition model by using the model training data and the third-party sample data, to generate a third-party intention recognition model, where the third-party intention recognition model is an intention recognition model corresponding to the third-party user.

According to the first possible implementation of the fourth aspect, the obtaining third-party sample data that matches the preset skill category includes:
obtaining a third-party intention added by the third-party user and third-party sample data corresponding to the third-party intention, where the third-party intention matches the preset skill category; or
obtaining sample data added by the third-party user on the basis of reference sample data corresponding to a preset intention.

According to a second possible implementation of the fourth aspect, the training the reference intention recognition model by using the model training data and the third-party sample data, to generate a third-party intention recognition model includes:
obtaining a user identifier of the third-party user;
associating the user identifier with the third-party sample data; and
training the reference intention recognition model by using the model training data and the third-party sample data associated with the user identifier, to generate the third-party intention recognition model.

According to a third possible implementation of the fourth aspect, the user identifier includes at least one of a brand name, an app name, and a product name corresponding to the third-party user.

According to a fourth possible implementation of the fourth aspect, the apparatus or the system further includes:
a speech recognition module, configured to obtain a speech text corresponding to a speech signal; and
a dialog management module, configured to: separately input the speech text to at least one reference intention recognition model and at least one third-party intention recognition model, output a first intention set by using the at least one reference intention recognition model, and output a second intention set by using the at least one third-party intention recognition model; and configured to determine an intention of the speech text based on a confidence level of an intention in the first intention set and a confidence level of an intention in the second intention set.

According to a fifth aspect, an embodiment of this application provides a terminal device, including:
a processor; and a memory, configured to store instructions that can be executed by the processor.

The processor is configured to execute the instructions to enable the terminal device to implement the method according to the first/second aspect or one or more of the plurality of possible implementations of the first/second aspect.

According to a sixth aspect, an embodiment of this application provides a nonvolatile computer-readable storage medium. The nonvolatile computer-readable storage medium stores computer program instructions. The computer program instructions are executed by a processor to implement the method according to the first/second aspect or one or more of the plurality of possible implementations of the first/second aspect.

According to a seventh aspect, an embodiment of this application provides a computer program product, including computer-readable code or a nonvolatile computer-readable storage medium that carries computer-readable code. When the computer-readable code is run in an electronic device, a processor in the electronic device performs the method according to the first/second aspect or one or more of the plurality of possible implementations of the first/second aspect.

According to an eighth aspect, an embodiment of this application provides a chip. The chip includes at least one processor. The processor is configured to run a computer program or computer instructions stored in a memory, to perform the method in any possible implementation of the foregoing aspects.

Optionally, the chip may further include a memory, and the memory is configured to store a computer program or computer instructions. Optionally, the chip may further include a communication interface, configured to communicate with another module other than the chip.

Optionally, one or more chips may form a chip system.

### BRIEF DESCRIPTION OF DRAWINGS

The accompanying drawings included in this specification and constituting a part of this specification and this specification jointly show example embodiments, features, and aspects of this application, and are intended to explain principles of this application.
FIG. 1A and FIG. 1B are an example diagram of a scenario according to an embodiment of this application;
FIG. 2 is an example diagram of a scenario according to an embodiment of this application;
FIG. 3 is an example diagram of a scenario according to an embodiment of this application;
FIG. 4 is an example diagram of a scenario according to an embodiment of this application;
FIG. 5 is a flowchart of a method for determining a user intention according to an embodiment of this application;
FIG. 6 is a flowchart of a method for determining a user intention according to an embodiment of this application; and
FIG. 7 is a schematic diagram of a structure of a terminal device according to an embodiment of this application.

### DESCRIPTION OF EMBODIMENTS

Various example embodiments, features, and aspects of this application are described in detail below with reference to the accompanying drawings. Same reference numerals in the accompanying drawings indicate elements that have same or similar functions. Although various aspects of embodiments are shown in the accompanying drawings, the accompanying drawings are not necessarily drawn to scale unless otherwise specified.

The specific term "example" herein means "used as an example, an embodiment, or an illustration". Any embodiment described as an "example" is not necessarily explained as being superior or better than other embodiments.

In addition, to better describe this application, numerous specific details are provided in the following specific implementations. A person skilled in the art should understand that this application can also be implemented without some specific details. In some embodiments, methods, means, elements, and circuits that are well-known to a person skilled in the art are not described in detail, so that the subject matter of this application is highlighted.

To clearly show a method for determining a user intention provided in embodiments of this application, the technical solutions are described below by using a specific application scenario.

In this example scenario, a search intention of a user is to search for delicious dumplings around by using XX, where XX may be a name of an application. Therefore, in step 1, the user sends a speech signal by using a voice assistant. For example, the voice assistant may include a device that has a microphone and a communication module, for example, a smartphone, a sound box, a computer, or a smart wearable device. After receiving the speech signal, the voice assistant may send the speech signal to a speech recognition module. The speech recognition module is configured to recognize a speech text corresponding to the speech signal. For example, the speech recognition module recognizes that the speech text corresponding to the speech signal is "search for delicious dumplings nearby by using XX". In step 2, the speech recognition module may send the speech text to a dialog management module. The dialog management module is configured to determine a user intention corresponding to the speech signal. Based on the technical solutions provided in embodiments of this application, in step 3 and step 4, the dialog management module may send the speech text to at least one reference intention recognition model and at least one third-party intention recognition model. The intention recognition model and the third-party intention recognition model may include, for example, an NLU (Natural Language Understanding, natural language understanding) model.

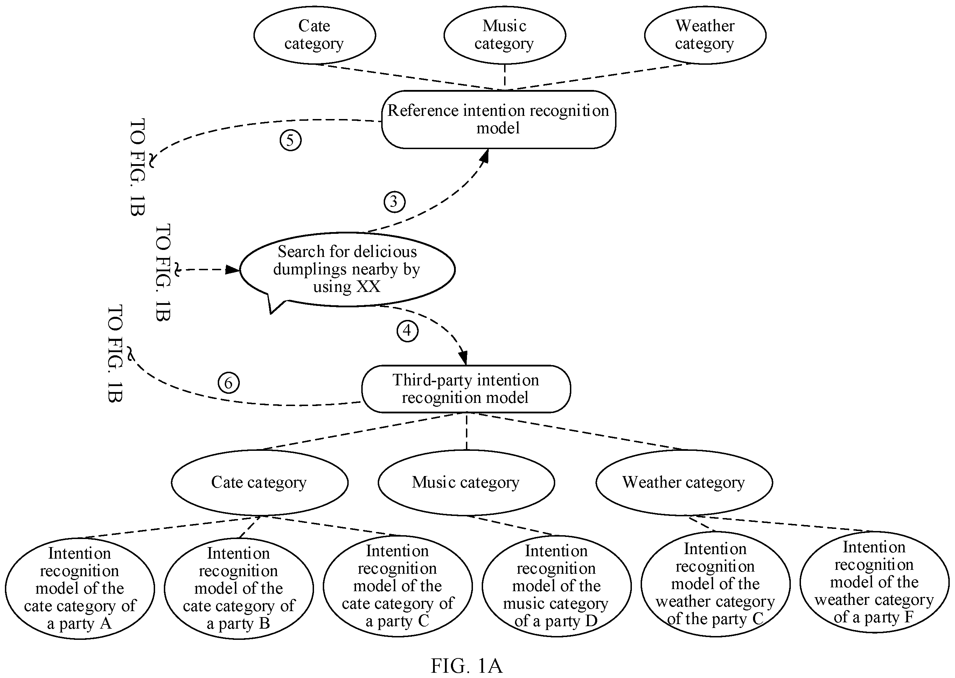

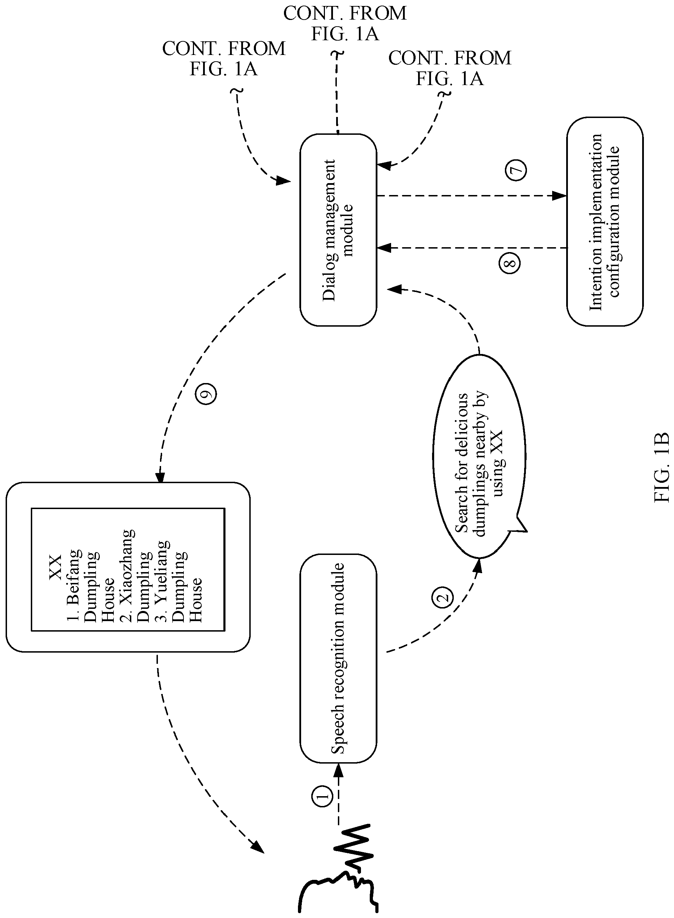

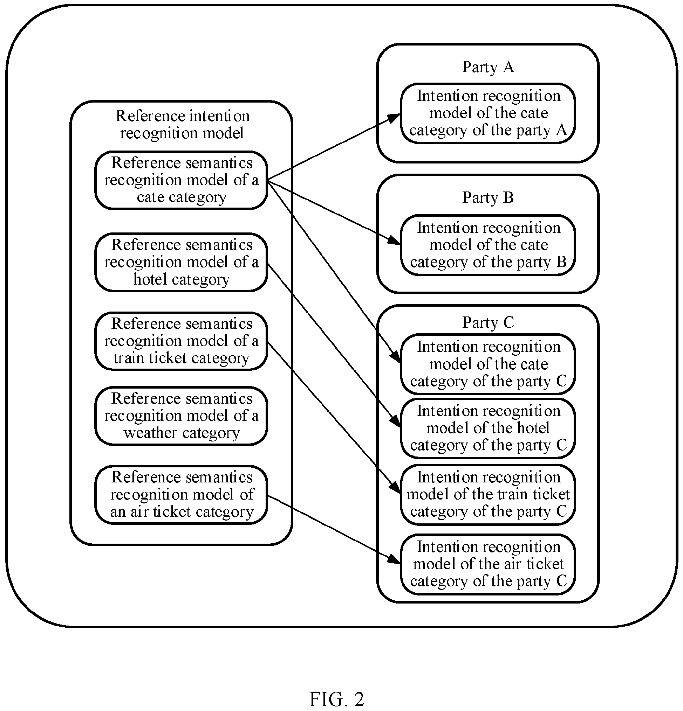

In embodiments of this application, an intelligent speech interaction platform may provide reference intention recognition models of a plurality of preset skill categories. As shown in FIG. 1A, FIG. 1B, and FIG. 2, the reference intention recognition models may include a reference intention recognition model of a cate category, a reference intention recognition model of a music category, a reference intention recognition model of a hotel category, a reference intention recognition model of a train ticket category, a reference intention recognition model of a weather category, a reference intention recognition model of an air ticket category, and the like. The preset skill category may include at least one of the following: the cate category (or referred to as a cate search category, where other similarities in this specification may be similarly understood), the music category, the hotel category, the train ticket category, the weather category, the air ticket category, and the like. Based on the reference intention recognition models of the plurality of preset skill categories provided by the intelligent speech interaction platform, a third-party platform or a third-party user (namely, a developer or a maintenance person of a third-party platform) may develop a customized third-party intention recognition model. For example, third-party users such as a party A and a party B that provide a cate service may obtain intention recognition models of the cate category of the party A and the party B through training based on the reference intention recognition model of the cate category, and do not need to develop a skill trigger manner with a customized skill wakeup word (for example, do not need to develop a skill wakeup word corresponding to the cate category). For a party C that provides a travel service, service items involved include a cate, a hotel, a train ticket, an air ticket, and the like. Based on this, the party C may respectively obtain intention recognition models of the party C for a plurality of service items through training based on a plurality of reference intention recognition models such as the reference intention recognition model of the cate category, the reference intention recognition model of the hotel category, the reference intention recognition model of the train ticket category, and the reference intention recognition model of the air ticket category.

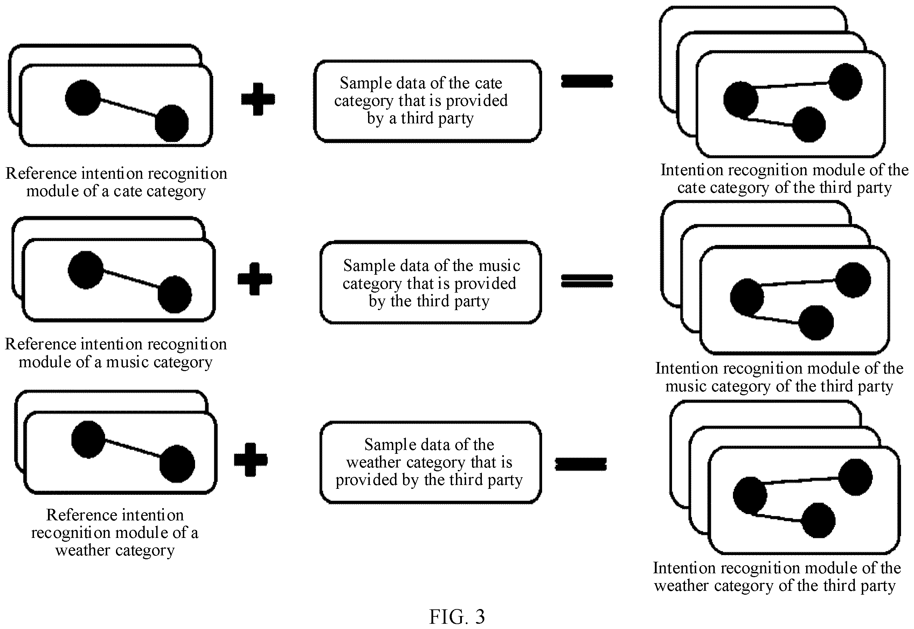

FIG. 3 is a schematic diagram of obtaining a third-party intention recognition model through training based on a reference intention recognition model. As shown in FIG. 3, the third-party platform may provide sample data corresponding to the preset skill category. For example, the party A or the party B may provide sample data corresponding to the cate category, and the party C may provide sample data corresponding to the cate category, the hotel category, the train ticket category, and the air ticket category. In this way, after the sample data provided by the third party is obtained, the sample data provided by the third party may be added on the basis of the reference intention recognition model, and the reference intention recognition model may be trained to generate the third-party intention recognition model. In embodiments of this application, in a training process, model training data of the reference intention recognition model may be retained. The model training data may include a training sample data set, a model parameter, a verification sample data set, and the like. In this way, after the sample data provided by the third party is added, fine tuning (Fine Tuning) may be performed on the reference intention recognition model to generate the third-party intention recognition model. In embodiments of this application, based on the manner of generating the third-party intention recognition model, a same preset skill category may correspond to a plurality of third-party intention recognition models. As shown in FIG. 1A and FIG. 1B, a third-party intention recognition model of the cate category may include an intention recognition model of the cate category of the party A, an intention recognition model of the cate category of the party B, an intention recognition model of the cate category of the party C, and the like, and a third-party intention recognition model of the weather category may include an intention recognition model of the weather category of the party C and an intention recognition model of the weather category of a party F.

In step 5 and step 6, after the speech text "search for delicious dumplings nearby by using XX" is input to the at least one reference intention recognition model, a first intention set is output by using the at least one reference intention recognition model, where the first intention set may include a plurality of intentions and confidence levels respectively corresponding to the intentions, and after the speech text is input to the at least one third-party intention recognition model, a second intention set is output by using the at least one third-party intention recognition model, where the second intention set may also include a plurality of intentions and confidence levels respectively corresponding to the intentions. The intention in the first intention set may include a predetermined quantity of intentions with a highest confidence level output by the at least one reference intention recognition model, and the intention in the second intention set may include a predetermined quantity of intentions with a highest confidence level output by the at least one third-party intention recognition model.

After obtaining the first intention set and the second intention set, the dialog management module may determine the final user intention from the first intention set and the second intention set. In an embodiment of this application, an intention with a highest confidence level in the second intention set is used as the intention of the speech text when it is determined that the confidence levels of all the intentions included in the first intention set are less than or equal to a first preset threshold, and the confidence levels of all the intentions included in the second intention set are greater than a second preset threshold. In another embodiment of this application, an intention with a highest confidence level in the first intention set is used as the intention of the speech text when it is determined that the confidence levels of all the intentions included in the second intention set are less than or equal to a second preset threshold. In another embodiment of this application, an intention with a highest confidence level in the first intention set and the second intention set is used as the intention of the speech text when it is determined that the confidence levels of all the intentions included in the first intention set are greater than or equal to a first preset threshold, and the confidence levels of all the intentions included in the second intention set are greater than a second preset threshold. For example, the final user intention determined by the dialog management module in the foregoing manner is to recommend cate by using the XX app.

As shown in FIG. 1A and FIG. 1B, after the dialog management module determines the user intention corresponding to the speech text, in step 7, the user intention may be input to an intention implementation configuration module. The intention implementation configuration module may determine an implementation of the user intention, for example, may provide, to the dialog management module, an API for connecting to a third-party platform or a jump link. After the dialog management module receives the API or the jump link, in step 9, a related page may be displayed in the corresponding app on the third-party platform.

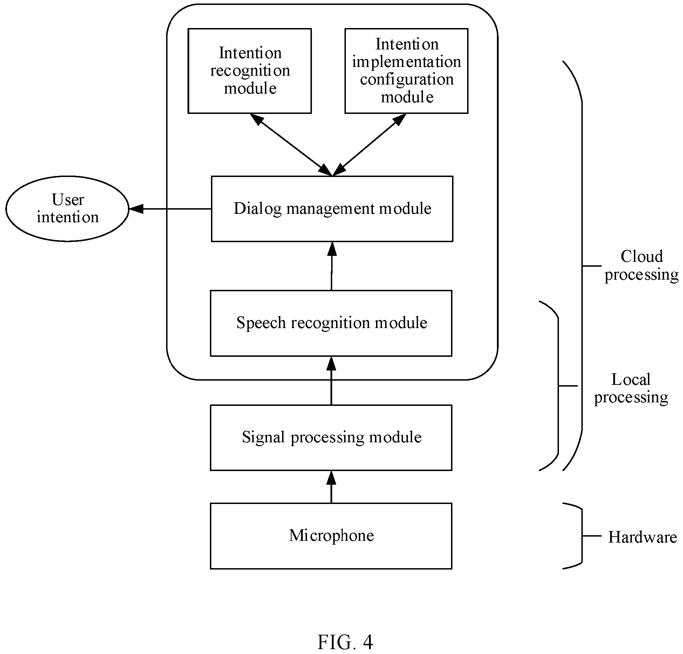

FIG. 4 shows functional modules according to an embodiment of this application. These functional modules may include the following:
(1) In terms of hardware, a microphone or a microphone array may be included.

The microphone or the microphone array may be disposed in a voice assistant device. The microphone or the microphone array may not only obtain a sound signal, but also enhance a sound in a sound source direction, and suppress noise in a non-sound source direction.

In addition, directional noise cancellation of a sound may be implemented by using a combination of a camera and a microphone array.

(2) In terms of local processing, a signal processing module may be included.

The signal processing module not only performs processing such as amplification and filtering on an obtained speech signal, but also determines an angle of a sound source after determining a position of the sound source, and further controls sound pickup of the microphone or the microphone array, to implement directional noise cancellation.

(3) There is cloud processing, that is, processing is implemented in the cloud. Certainly, there may be local processing. This may be determined based on a processing capability of a device, a use environment, and the like. Certainly, if processing is implemented in the cloud, an algorithm model is updated and adjusted by using big data, which can effectively improve accuracy of speech recognition, natural language understanding, and dialog management.

Cloud processing may involve implementing a function of at least one of the following modules in the cloud: a speech recognition module, a dialog management module, an intention recognition module, an intention implementation configuration module, and the like.

The speech recognition module is mainly configured to recognize a speech text of an obtained speech signal. For example, if speech is obtained, and a meaning of the speech needs to be understood, specific text content of the speech needs to be known first. In this process, a speech signal needs to be converted into a speech text by using the speech recognition module.

For a machine, a text is a text, and a meaning expressed by the text needs to be determined. In this case, a natural meaning corresponding to the speech text needs to be determined, to recognize an intention of the speech of a user. A purpose of the dialog management module is to implement effective communication with the user to obtain information required for performing an operation. In this embodiment of this application, the dialog management module may be configured to: invoke the intention recognition module to obtain an intention set and a confidence level of an intention, determine a final intention based on the intention set and the confidence level of the intention in the intention set, and invoke the intention implementation configuration module based on the intention and a skill category to which the intention belongs, to obtain an implementation of the intention.

Specific functions corresponding to one or more of the speech recognition module, the dialog management module, the intention recognition module, and the intention implementation configuration module may be processed in the cloud (that is, implemented by using a server, for example, a cloud server), or may be locally processed (for example, implemented on a terminal device instead of a server). This may be determined based on a processing capability of a device, a use environment, and the like. Certainly, if processing is performed in the cloud, an algorithm model is updated and adjusted by using big data, which can effectively improve accuracy of speech recognition, natural language understanding, and dialog management.

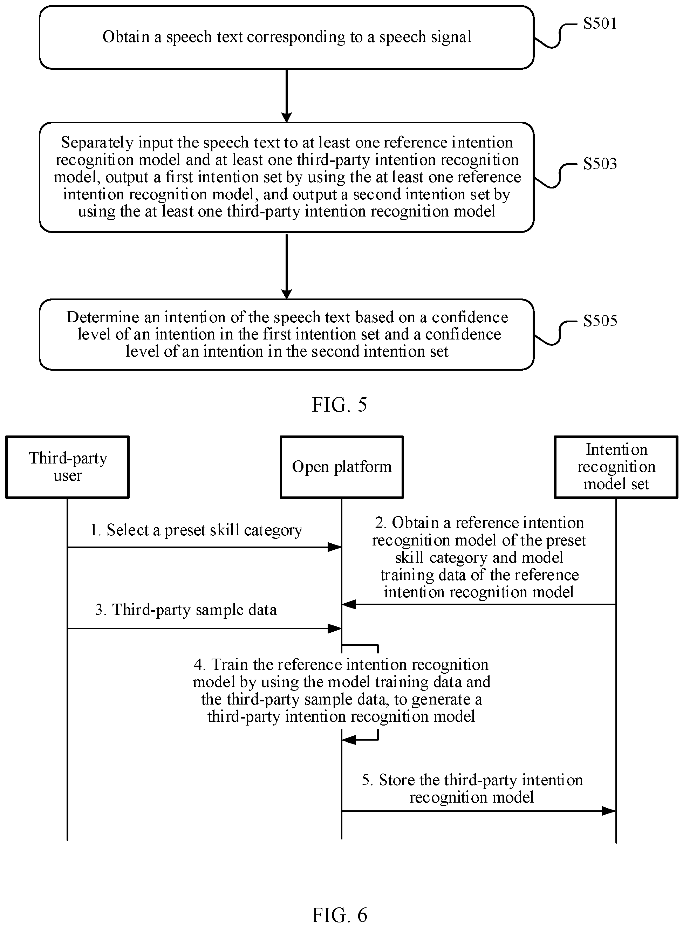

The method for determining a user intention in this application is described in detail below with reference to the accompanying drawings. FIG. 5 is a schematic flowchart of a method for determining a user intention according to an embodiment. Although this application provides the operation steps of the method shown in the following embodiments or the accompanying drawings, the method may include more or fewer operation steps based on conventional or non-creative efforts. An execution sequence of steps between which there is no necessary logical causal relationship is not limited to the execution sequence provided in embodiments of this application. When being performed in an actual process of determining a user intention or by an apparatus, the method may be performed in the method sequence shown in embodiments or the accompanying drawings or performed in parallel (for example, in a parallel processor or a multi-thread processing environment).

As shown in FIG. 5, in an embodiment of this application, the method may include the following steps.

S501: Obtain a speech text corresponding to a speech signal.

In this embodiment of this application, a user may send the speech signal by using a voice assistant. For example, the voice assistant may include a device that has a microphone and a communication module, for example, a smartphone, a sound box, a computer, or a smart wearable device. After receiving the speech signal, the voice assistant may send the speech signal to a local or cloud speech recognition module. The speech recognition module may recognize the speech text corresponding to the speech signal. The speech recognition module may include, for example, an automatic speech recognition (Automatic Speech Recognition, ASR) module.

S502: Separately input the speech text to at least one reference intention recognition model and at least one third-party intention recognition model, output a first intention set by using the at least one reference intention recognition model, and output a second intention set by using the at least one third-party intention recognition model, where the third-party intention recognition model is obtained through training based on the reference intention recognition model of a same skill category and model training data of the reference intention recognition model.

In this embodiment of this application, the third-party intention recognition model is set to be obtained through training based on the reference intention recognition model of the same skill category and the model training data of the reference intention recognition model. The skill category includes, for example, a music skill, a video skill, a cate skill, a weather skill, an air ticket skill, and the like. That is, if a third-party intention recognition model of a cate category needs to be obtained through training, training needs to be performed based on a reference intention recognition model of the cate category; or if a third-party intention recognition model of a music category needs to be obtained through training, training needs to be performed based on a reference intention recognition model of the music category. In this embodiment of this application, reference intention recognition models of a plurality of skill categories may be provided to a third-party user.

In an embodiment of this application, the third-party intention recognition model may be obtained through training in the following manner:

SS1: Obtain a reference intention recognition model of a preset skill category and model training data of the reference intention recognition model, where the model training data includes at least a plurality of preset intentions and reference sample data and reference model parameters respectively corresponding to the plurality of preset intentions.

SS3: Obtain third-party sample data that matches the preset skill category.

SS5: Train the reference intention recognition model by using the model training data and the third-party sample data, to generate the third-party intention recognition model.

The foregoing embodiment is described below with reference to FIG. 6. As shown in FIG. 6, an open platform for training an intention recognition model may be provided to the third-party user (which may also be understood as a third-party platform herein). The open platform may include an intelligent speech interaction platform. The third-party user may obtain the third-party intention recognition model through training on the open platform. Based on this, as shown in step 1 in FIG. 6, the third party first needs to determine a skill category of a to-be-trained intention recognition model. In step 2, after obtaining the preset skill category determined by the third party, the open platform may obtain a reference intention recognition model of the preset skill category and model training data of the reference intention recognition model. In this embodiment of this application, an area for storing the reference intention recognition model and the third-party intention recognition model may be set. Based on this, the open platform may obtain the required reference intention recognition model and the model training data of the reference intention recognition model from the area. The model training data may include at least a plurality of preset intentions and reference sample data and reference model parameters respectively corresponding to the plurality of preset intentions. Table 1 shows several preset intentions and related information included in the reference intention recognition model of the cate category. As shown in Table 1, information about the preset intention may include a unique intention identifier, an intention name, an implementation, an operation, and the like. The reference sample data corresponding to the preset intention may include a corpus used for training the preset intention, and the like. For example, for "order takeout", a corresponding corpus may include, for example, "order takeout for me", "I want to order fried chicken", or "order a cup of coffee for me". Certainly, the reference sample data may further include at least one of a slot identifier, a slot dictionary, a slot value, and the like corresponding to the reference sample data. For example, for a corpus "what is the weather like in Shanghai today?", a corresponding slot and slot value may be marked and may include "city=Shanghai" and "time=today". Corresponding slot information is marked in the sample data, so that slot prediction capabilities of the reference intention recognition model and the third-party intention recognition model can be enhanced.

**Table 1: Table of information about the preset intention in the reference intention recognition model of the cate category**

| Intention identifier | Intention name | Implementation | Operation |
|---|---|---|---|
| ORDER_TAKEOUT | Order takeout | Deeplink | Modified |
| SEARCH_CATE | Search for a cate | RESTful API | Modified |
| BOOK_RESTAURANT | Book a restaurant | RESTful API | Modified |

In this embodiment of this application, as shown in step 3 in FIG. 6, the third-party user may provide third-party sample data to the open platform. In an embodiment of this application, on the basis of the plurality of preset intentions included in the reference intention recognition model, the third-party user may add a customized third-party intention and third-party sample data corresponding to the third-party intention. The third-party intention needs to match the preset skill category. In an example, on the basis of the preset intention provided in the reference intention recognition model of the cate category shown in Table 1, the third-party user may add another customized preset intention of the cate category, for example, add a third-party intention "search for a cate discount coupon". As shown in Table 2, a formed third-party intention recognition model of the cate category may include the following intentions. The added third-party intention may be set with an intention identifier, an intention name, and an implementation customized by the user. Certainly, after adding the third-party intention, the third-party user further needs to provide the third-party sample data corresponding to the third-party intention. For example, for the third-party intention "search for a cate discount coupon", added third-party sample data may include, for example, "are there any coffee coupons?" or "is there a discount on fried chicken of an XX brand?".

**Table 2: Table of information about the intention in the third-party intention recognition model of the cate category**

| Intention identifier | Intention name | Implementation | Operation |
|---|---|---|---|
| ORDER_TAKEOUT | Order takeout | Deeplink | Modified |
| SEARCH_CATE | Search for a cate | RESTful API | Modified |
| BOOK_RESTAURANT | Book a restaurant | RESTful API | Modified |
| SEARCH_CATE_DISCOUNT | Search for a cate discount coupon | RESTful API | Modified or deleted |

In this embodiment of this application, it may be set that the third-party user cannot delete the preset intention included in the reference intention recognition model. In this way, the third-party intention recognition model can be prevented from polluting the intention in the reference intention recognition model on the platform, and difficulty of intention development by the third party can be reduced and a parsing capability of the third-party intention recognition model can be improved as training and development are performed based on a mature reference intention recognition model. However, in an embodiment of this application, the third-party user may perform a modification operation on the preset intention. A modification scope may include, for example, modifying an intention name or adding sample data of the preset intention. In an example, the third-party user finds that reference sample data corresponding to the preset intention "order takeout" provided by the open platform is not rich enough or does not involve a featured product of the third-party user. Based on this, the third-party user may provide some third-party sample data to enrich a quantity of pieces of sample data, for example, may add sample data that includes a name of the featured product of the third-party user.

It should be noted that the open platform may further review the third-party intention and the third-party sample data provided by the third-party user, so that the intention or the sample data provided by the third-party user matches the selected skill category. In an example, in a process of training the third-party intention recognition model of the cate category, the third-party user adds a third-party intention "open music". When determining, through review, that the third-party intention definitely does not match the corresponding cate skill category, the open platform may provide feedback to the third-party user. Similarly, the open platform may further review the sample data provided by the third-party user, and may also provide feedback to the third-party user when determining that the corresponding sample data does not match the corresponding skill category.

As shown in step 4 in FIG. 6, the open platform may train the reference intention recognition model by using the model training data of the reference intention recognition model and the third-party sample data, to generate the third-party intention recognition model. In an embodiment of this application, the reference intention recognition model may be trained by using a fine tuning (Fine Tuning) algorithm. Specifically, only some network layers of the reference intention recognition model may be adjusted, for example, only a last network layer may be adjusted. This manner is applicable to a case in which the third-party user provides a limited quantity of pieces of sample data. In this manner, the third-party intention recognition model may be quickly obtained through training. Certainly, in another embodiment, the reference intention recognition model may be further retrained. This is particularly applicable to a case in which the third-party user provides a large quantity of pieces of sample data. This is not limited in this application.

In an actual application environment, in most cases, a speech instruction sent by the user (who is a common user and is different from the third-party user described in this specification) includes a user identifier of a third party (which may also be referred to as a third-party platform or a third-party user herein), for example, "order a cup of XX coffee" (XX is a coffee brand), "search for delicious dumplings nearby by using XX" (XX is a cate application), or "open XX music" (XX is a music play application). Based on this, in an embodiment of this application, the third-party sample data may be associated with a user identifier of the third-party user in the process of training the third-party intention recognition model. The user identifier includes, for example, at least one of a brand name, an app name, and a product name of the third-party user. In an actual application environment, it is difficult for the open platform to require that each piece of sample data provided by the third-party user includes the corresponding user identifier, especially when there are a large quantity of pieces of sample data. Based on this, in an embodiment of this application, the user identifier provided by the third-party user may be first obtained. In the process of training the model, the user identifier may be automatically associated with each piece of third-party sample data. An association manner may include, for example, adding the user identifier to the third-party sample data. Then, the reference intention recognition model may be trained by using the model training data and the third-party sample data associated with the user identifier, to generate the third-party intention recognition model.

In step 5 shown in FIG. 6, after the third-party intention recognition model is generated through training, the third-party intention recognition model may be stored in an intention recognition model set. In this way, for a same skill category, the intention recognition model set may include a plurality of third-party intention recognition models generated by a plurality of different third-party users through training.

Based on the foregoing embodiments of generating the third-party intention recognition model through training, when the speech text is separately input to the at least one reference intention recognition model and the at least one third-party intention recognition model, the first intention set may be output by using the at least one reference intention recognition model, and the second intention set may be output by using the at least one third-party intention recognition model. Each of the first intention set and the second intention set includes a plurality of recognized intentions and confidence levels of the intentions. In this embodiment of this application, there are a large quantity of intentions. Therefore, a quantity of intentions included in each of the first intention set and the second intention set may be less than or equal to a preset quantity. For example, the first intention set may include M intentions with a highest confidence level recognized by the at least one reference intention recognition model. M may be set to 5, 10, 20, or the like. This is not limited in this application. The second intention set may include N intentions with a highest confidence level recognized by the at least one third-party intention recognition model. N may be set to 20, 50, 80, or the like. This is not limited in this application.

S503: Determine an intention of the speech text based on a confidence level of an intention in the first intention set and a confidence level of an intention in the second intention set.

In this embodiment of this application, after the confidence level of the intention in the first intention set and the confidence level of the intention in the second intention set are obtained, the intention corresponding to the speech text may be determined.

In an embodiment of this application, an intention with a highest confidence level in the second intention set is used as the intention of the speech text when it is determined that confidence levels of all intentions included in the first intention set are less than or equal to a first preset threshold, and confidence levels of all intentions included in the second intention set are greater than a second preset threshold. In another embodiment of this application, an intention with a highest confidence level in the first intention set is used as the intention of the speech text when it is determined that confidence levels of all intentions included in the second intention set are less than or equal to a second preset threshold. In another embodiment of this application, an intention with a highest confidence level in the first intention set and the second intention set is used as the intention of the speech text when it is determined that confidence levels of all intentions included in the first intention set are greater than or equal to a first preset threshold, and confidence levels of all intentions included in the second intention set are greater than a second preset threshold.

In this embodiment of this application, the first preset threshold and the second preset threshold may be used to select an intention with a high confidence level, and exclude some intentions with a very low confidence level. Each of the first preset threshold and the second preset threshold is set to match a corresponding skill category. In an example, for an intention of the cate category, the first preset threshold may be set to a, and the second preset threshold may be set to b. For example, a is 0.75, and b is 0.7. In another aspect, for an intention of the music category, the first preset threshold may be set to c, and the second preset threshold may be set to d. Values of the first preset threshold and the second preset threshold may be determined based on a factor such as performance of the intention recognition model. This is not limited in this application.

In this embodiment of this application, after the user intention corresponding to the speech text is determined, the user intention may be implemented. As shown in Table 1 and Table 2, in this embodiment of this application, an implementation of each intention may be predefined. The implementation may include at least one of the following: a deeplink, a RESTful API, returning a required text, and the like. For example, if it is recognized that the user intention is an intention of ordering takeout by using an XX app, a takeout ordering page of the XX app may be displayed in a user interface by using a deeplink, or a jump link may be displayed in a user interface by using a RESTful API. Certainly, information required by the user may further be directly displayed in the user interface. For example, if the user wants to know weather information, after the weather information is obtained, the corresponding weather information may be displayed in the user interface in a form of a text or a card.

According to the method for determining a user intention provided in embodiments of this application, the speech text of the user can be recognized by using the at least one reference intention recognition model and the at least one third-party intention recognition model. The third-party intention recognition model is obtained through training based on the reference intention recognition model of the same skill category and the model training data of the reference intention recognition model. Therefore, it may be learned that in this embodiment of this application, a condition for training an intention recognition model may be provided to the third-party user, and the third-party user may obtain the intention recognition model that belongs to the third-party user through training based on the reference intention recognition model of the preset skill category, to enhance extensibility of a customized intention of the third-party user. In addition, from a perspective of the user, recognizing the speech text of the user by using a plurality of intention recognition models can help the user recall an intention with high accuracy, and optimize user experience.

According to another aspect, this application further provides a method for generating an intention recognition model, including:
obtaining a preset skill category selected by a third-party user;
obtaining a reference intention recognition model corresponding to the preset skill category and model training data of the reference intention recognition model;
obtaining third-party sample data that is from the third-party user and that matches the preset skill category; and
training the reference intention recognition model by using the model training data and the third-party sample data, to generate a third-party intention recognition model, where the third-party intention recognition model is an intention recognition model corresponding to the third-party user.

Optionally, in an embodiment of this application, the obtaining third-party sample data that matches the preset skill category includes:
obtaining a third-party intention added by the third-party user and third-party sample data corresponding to the third-party intention, where the third-party intention matches the preset skill category; or
obtaining sample data added by the third-party user on the basis of reference sample data corresponding to a preset intention.

Optionally, in an embodiment of this application, the training the reference intention recognition model by using the model training data and the third-party sample data, to generate a third-party intention recognition model includes:
obtaining a user identifier of the third-party user;
associating the user identifier with the third-party sample data; and
training the reference intention recognition model by using the model training data and the third-party sample data associated with the user identifier, to generate the third-party intention recognition model.

Optionally, in an embodiment of this application, the user identifier includes at least one of a brand name, an app name, and a product name corresponding to the third-party user.

Optionally, in an embodiment of this application, after the generating a third-party intention recognition model, the method further includes:
obtaining a speech text corresponding to a speech signal;
separately inputting the speech text to at least one reference intention recognition model and at least one third-party intention recognition model, outputting a first intention set by using the at least one reference intention recognition model, and outputting a second intention set by using the at least one third-party intention recognition model; and
determining an intention of the speech text based on a confidence level of an intention in the first intention set and a confidence level of an intention in the second intention set.

For implementations of the foregoing embodiments, refer to the descriptions of the related content in this specification. Details are not described herein.

According to another aspect, this application further provides an apparatus for determining a user intention, to correspond to the foregoing method for determining a user intention. The apparatus includes:
a speech recognition module, configured to obtain a speech text corresponding to a speech signal; and
a dialog management module, configured to: separately input the speech text to at least one reference intention recognition model and at least one third-party intention recognition model, output a first intention set by using the at least one reference intention recognition model, and output a second intention set by using the at least one third-party intention recognition model, where the third-party intention recognition model is obtained through training based on the reference intention recognition model of a same skill category and model training data of the reference intention recognition model; and configured to determine an intention of the speech text based on a confidence level of an intention in the first intention set and a confidence level of an intention in the second intention set.

Optionally, in an embodiment of this application, the third-party intention recognition model is obtained through training in the following manner:
obtaining a reference intention recognition model of a preset skill category and model training data of the reference intention recognition model, where the model training data includes at least a plurality of preset intentions and reference sample data and reference model parameters respectively corresponding to the plurality of preset intentions;
obtaining third-party sample data that matches the preset skill category; and
training the reference intention recognition model by using the model training data and the third-party sample data, to generate the third-party intention recognition model.

Optionally, in an embodiment of this application, the obtaining third-party sample data that matches the preset skill category includes:
obtaining a third-party intention added by a third-party user and third-party sample data corresponding to the third-party intention, where the third-party intention matches the preset skill category; or
obtaining sample data added by a third-party user on the basis of the reference sample data corresponding to the preset intention.

Optionally, in an embodiment of this application, the training the reference intention recognition model by using the model training data and the third-party sample data, to generate the third-party intention recognition model includes:
obtaining a user identifier of a third-party user;
associating the user identifier with the third-party sample data; and
training the reference intention recognition model by using the model training data and the third-party sample data associated with the user identifier, to generate the third-party intention recognition model.

Optionally, in an embodiment of this application, the user identifier includes at least one of a brand name, an app name, and a product name corresponding to the third-party user.

Optionally, in an embodiment of this application, the determining an intention of the speech text based on a confidence level of an intention in the first intention set and a confidence level of an intention in the second intention set includes:
using an intention with a highest confidence level in the second intention set as the intention of the speech text when it is determined that confidence levels of all intentions included in the first intention set are less than or equal to a first preset threshold, and confidence levels of all intentions included in the second intention set are greater than a second preset threshold;
using an intention with a highest confidence level in the first intention set as the intention of the speech text when it is determined that confidence levels of all intentions included in the second intention set are less than or equal to a second preset threshold; or
using an intention with a highest confidence level in the first intention set and the second intention set as the intention of the speech text when it is determined that confidence levels of all intentions included in the first intention set are greater than or equal to a first preset threshold, and confidence levels of all intentions included in the second intention set are greater than a second preset threshold.

Optionally, in an embodiment of this application, each of the first preset threshold and the second preset threshold is set to match a corresponding skill category.

According to another aspect, this application further provides an apparatus for generating an intention recognition model, to correspond to the foregoing method for generating an intention recognition model. The apparatus includes:
a skill category obtaining module, configured to obtain a preset skill category selected by a third-party user;
a model obtaining module, configured to obtain a reference intention recognition model corresponding to the preset skill category and model training data of the reference intention recognition model;
a sample obtaining module, configured to obtain third-party sample data that is from the third-party user and that matches the preset skill category; and
a model generation module, configured to train the reference intention recognition model by using the model training data and the third-party sample data, to generate a third-party intention recognition model, where the third-party intention recognition model is an intention recognition model corresponding to the third-party user.

Optionally, in an embodiment of this application, the obtaining third-party sample data that matches the preset skill category includes:
obtaining a third-party intention added by the third-party user and third-party sample data corresponding to the third-party intention, where the third-party intention matches the preset skill category; or
obtaining sample data added by the third-party user on the basis of reference sample data corresponding to a preset intention.

Optionally, in an embodiment of this application, the training the reference intention recognition model by using the model training data and the third-party sample data, to generate a third-party intention recognition model includes:
obtaining a user identifier of the third-party user;
associating the user identifier with the third-party sample data; and
training the reference intention recognition model by using the model training data and the third-party sample data associated with the user identifier, to generate the third-party intention recognition model.

Optionally, in an embodiment of this application, the user identifier includes at least one of a brand name, an app name, and a product name corresponding to the third-party user.

Optionally, in an embodiment of this application, the apparatus further includes:
a speech recognition module, configured to obtain a speech text corresponding to a speech signal; and
a dialog management module, configured to: separately input the speech text to at least one reference intention recognition model and at least one third-party intention recognition model, output a first intention set by using the at least one reference intention recognition model, and output a second intention set by using the at least one third-party intention recognition model; and configured to determine an intention of the speech text based on a confidence level of an intention in the first intention set and a confidence level of an intention in the second intention set.

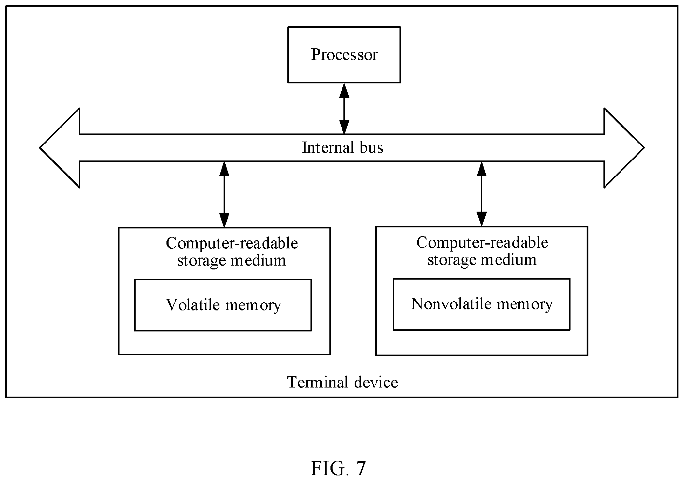

An embodiment of this application provides a terminal device. As shown in FIG. 7, the terminal device includes a processor and a memory, configured to store instructions that can be executed by the processor. The processor is configured to execute the instructions to enable the terminal device to implement the foregoing method.

An embodiment of this application provides a nonvolatile computer-readable storage medium. The nonvolatile computer-readable storage medium stores computer program instructions. When the computer program instructions are executed by a processor, the foregoing method is implemented.

An embodiment of this application provides a computer program product, including computer-readable code or a nonvolatile computer-readable storage medium that carries computer-readable code. When the computer-readable code is run in a processor in an electronic device, the processor in the electronic device performs the foregoing method.

The computer-readable storage medium may be a tangible device that may retain and store instructions for use by an instruction execution device. The computer-readable storage medium may be, for example, but is not limited to an electrical storage device, a magnetic storage device, an optical storage device, an electromagnetic storage device, a semiconductor storage device, or any suitable combination thereof. More specific examples (a non-exhaustive list) of the computer-readable storage medium include a portable computer disk, a hard disk, a random access memory (Random Access Memory, RAM), a read-only memory (Read-Only Memory, ROM), an erasable programmable read-only memory (Electrically Programmable Read-Only Memory, EPROM), a flash memory, a static random access memory (Static Random Access Memory, SRAM), a portable compact disc read-only memory (Compact Disc Read-Only Memory, CD-ROM), a digital versatile disc (Digital Versatile Disc, DVD), a memory stick, a floppy disk, a mechanical coding device, for example, a punched card or a protrusion structure in a groove that stores instructions, and any suitable combination thereof.

The computer-readable program instructions or code described herein may be downloaded from a computer-readable storage medium to each computing/processing device, or downloaded to an external computer or an external storage device over a network such as the Internet, a local area network, a wide area network, and/or a wireless network. The network may include a copper transmission cable, optical fiber transmission, wireless transmission, a router, a firewall, a switch, a gateway computer, and/or an edge server. A network adapter card or a network interface in each computing/processing device receives computer-readable program instructions from a network, and forwards the computer-readable program instructions for storage in a computer-readable storage medium in each computing/processing device.

The computer program instructions used to perform operations in this application may be assembly instructions, instruction set architecture (Instruction Set Architecture, ISA) instructions, machine instructions, machine-related instructions, microcode, firmware instructions, status setting data, or source code or target code written in any combination of one or more programming languages. The programming languages include object-oriented programming languages such as Smalltalk and C++, and a conventional procedural programming language such as a "C" language or a similar programming language. The computer-readable program instructions may be executed entirely on a user computer, partially on a user computer, as an independent software package, partially on a user computer and partially on a remote computer, or entirely on a remote computer or a server. When a remote computer is involved, the remote computer may be connected to a user computer over any type of network, including a local area network (Local Area Network, LAN) or a wide area network (Wide Area Network, WAN), or may be connected to an external computer (for example, connected by using an Internet service provider over the Internet). In some embodiments, an electronic circuit, for example, a programmable logic circuit, a field-programmable gate array (Field-Programmable Gate Array, FPGA), or a programmable logic array (Programmable Logic Array, PLA), is customized by using status information of the computer-readable program instructions. The electronic circuit may execute the computer-readable program instructions, to implement the various aspects of this application.

The various aspects of this application are described herein with reference to the flowcharts and/or the block diagrams of the method, the apparatus (system), and the computer program product according to embodiments of this application. It should be understood that each block in the flowcharts and/or the block diagrams and combinations of blocks in the flowcharts and/or the block diagrams may be implemented by using computer-readable program instructions.

These computer-readable program instructions may be provided to a processor of a general-purpose computer, a dedicated computer, or another programmable data processing apparatus to generate a machine, so that the instructions, when being executed by the processor of the computer or the another programmable data processing apparatus, generate an apparatus for implementing the functions/actions specified in one or more blocks in the flowcharts and/or the block diagrams. Alternatively, these computer-readable program instructions may be stored in a computer-readable storage medium. These instructions enable a computer, a programmable data processing apparatus, and/or another device to work in a specific manner. Therefore, the computer-readable medium storing the instructions includes an artifact that includes instructions for implementing various aspects of the functions/actions specified in one or more blocks in the flowcharts and/or the block diagrams.

Alternatively, these computer-readable program instructions may be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implement the functions/actions specified in one or more blocks in the flowcharts and/or the block diagrams.

The flowcharts and the block diagrams in the accompanying drawings show possible implementation architectures, functions, and operations of the apparatus, system, method, and computer program product according to a plurality of embodiments of this application. In this regard, each block in the flowcharts or the block diagrams may represent a module, a program segment, or a part of the instructions, and the module, the program segment, or the part of the instructions includes one or more executable instructions for implementing a specified logical function. In some alternative implementations, the functions marked in the blocks may alternatively occur in a sequence different from that marked in the accompanying drawings. For example, two consecutive blocks may actually be executed substantially in parallel, or two consecutive blocks may sometimes be executed in a reverse sequence, and this depends on functions involved.

It should also be noted that each block in the block diagrams and/or the flowcharts and a combination of blocks in the block diagrams and/or the flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described with reference to embodiments, in a process of implementing the present invention that claims protection, a person skilled in the art may understand and implement another variation of the disclosed embodiments by viewing the accompanying drawings, the disclosed content, and the appended claims. In the claims, the word "comprise" (comprising) does not exclude another component or step, and "a" or "one" does not exclude a meaning of plurality. A single processor or another unit may implement several functions enumerated in the claims. Some measures are recorded in dependent claims that are different from each other, but this does not indicate that these measures cannot be combined to produce a better effect.

Embodiments of this application are described above. The foregoing descriptions are examples, are not exhaustive, and are not limited to the disclosed embodiments. Many modifications and changes are apparent to a person of ordinary skill in the art without departing from the scope and spirit of the described embodiments. The selection of terms used in this specification is intended to best explain the principles of the embodiments, practical application, or improvements to technologies in the market, or to enable another person of ordinary skill in the art to understand the embodiments disclosed in this specification.

## Claims

1. A method for determining a user intention, comprising:
obtaining a speech text corresponding to a speech signal;
separately inputting the speech text to at least one reference intention recognition model and at least one third-party intention recognition model, outputting a first intention set by using the at least one reference intention recognition model, and outputting a second intention set by using the at least one third-party intention recognition model, wherein the third-party intention recognition model is obtained through training based on the reference intention recognition model of a same skill category and model training data of the reference intention recognition model; and
determining an intention of the speech text based on a confidence level of an intention in the first intention set and a confidence level of an intention in the second intention set.

2. The method according to claim 1, wherein the third-party intention recognition model is obtained through training in the following manner:
obtaining a reference intention recognition model of a preset skill category and model training data of the reference intention recognition model, wherein the model training data comprises at least a plurality of preset intentions and reference sample data and reference model parameters respectively corresponding to the plurality of preset intentions;
obtaining third-party sample data that matches the preset skill category; and
training the reference intention recognition model by using the model training data and the third-party sample data, to generate the third-party intention recognition model.

3. The method according to claim 2, wherein the obtaining third-party sample data that matches the preset skill category comprises:
obtaining a third-party intention added by a third-party user and third-party sample data corresponding to the third-party intention, wherein the third-party intention matches the preset skill category; or
obtaining sample data added by a third-party user on the basis of the reference sample data corresponding to the preset intention.

4. The method according to claim 2, wherein the training the reference intention recognition model by using the model training data and the third-party sample data, to generate the third-party intention recognition model comprises:
obtaining a user identifier of a third-party user;
associating the user identifier with the third-party sample data; and
training the reference intention recognition model by using the model training data and the third-party sample data associated with the user identifier, to generate the third-party intention recognition model.

5. The method according to claim 4, wherein the user identifier comprises at least one of a brand name, an app name, and a product name corresponding to the third-party user.

6. The method according to claim 1, wherein the determining an intention of the speech text based on a confidence level of an intention in the first intention set and a confidence level of an intention in the second intention set comprises:
using an intention with a highest confidence level in the second intention set as the intention of the speech text when it is determined that confidence levels of all intentions comprised in the first intention set are less than or equal to a first preset threshold, and confidence levels of all intentions comprised in the second intention set are greater than a second preset threshold;
using an intention with a highest confidence level in the first intention set as the intention of the speech text when it is determined that confidence levels of all intentions comprised in the second intention set are less than or equal to a second preset threshold; or
using an intention with a highest confidence level in the first intention set and the second intention set as the intention of the speech text when it is determined that confidence levels of all intentions comprised in the first intention set are greater than or equal to a first preset threshold, and confidence levels of all intentions comprised in the second intention set are greater than a second preset threshold.

7. The method according to claim 6, wherein each of the first preset threshold and the second preset threshold is set to match a corresponding skill category.

8. A method for generating an intention recognition model, comprising:
obtaining a preset skill category selected by a third-party user;
obtaining a reference intention recognition model corresponding to the preset skill category and model training data of the reference intention recognition model;
obtaining third-party sample data that is from the third-party user and that matches the preset skill category; and
training the reference intention recognition model by using the model training data and the third-party sample data, to generate a third-party intention recognition model, wherein the third-party intention recognition model is an intention recognition model corresponding to the third-party user.

9. The method according to claim 8, wherein the obtaining third-party sample data that matches the preset skill category comprises:
obtaining a third-party intention added by the third-party user and third-party sample data corresponding to the third-party intention, wherein the third-party intention matches the preset skill category; or
obtaining sample data added by the third-party user on the basis of reference sample data corresponding to a preset intention.

10. The method according to claim 8, wherein the training the reference intention recognition model by using the model training data and the third-party sample data, to generate a third-party intention recognition model comprises:
obtaining a user identifier of the third-party user;
associating the user identifier with the third-party sample data; and
training the reference intention recognition model by using the model training data and the third-party sample data associated with the user identifier, to generate the third-party intention recognition model.

11. The method according to claim 10, wherein the user identifier comprises at least one of a brand name, an app name, and a product name corresponding to the third-party user.

12. The method according to claim 8, wherein after the generating a third-party intention recognition model, the method further comprises:
obtaining a speech text corresponding to a speech signal;
separately inputting the speech text to at least one reference intention recognition model and at least one third-party intention recognition model, outputting a first intention set by using the at least one reference intention recognition model, and outputting a second intention set by using the at least one third-party intention recognition model; and
determining an intention of the speech text based on a confidence level of an intention in the first intention set and a confidence level of an intention in the second intention set.

13. An apparatus for determining a user intention, comprising:
a speech recognition module, configured to obtain a speech text corresponding to a speech signal; and
a dialog management module, configured to: separately input the speech text to at least one reference intention recognition model and at least one third-party intention recognition model, output a first intention set by using the at least one reference intention recognition model, and output a second intention set by using the at least one third-party intention recognition model, wherein the third-party intention recognition model is obtained through training based on the reference intention recognition model of a same skill category and model training data of the reference intention recognition model; and configured to determine an intention of the speech text based on a confidence level of an intention in the first intention set and a confidence level of an intention in the second intention set.

14. The apparatus according to claim 13, wherein the third-party intention recognition model is obtained through training in the following manner:
obtaining a reference intention recognition model of a preset skill category and model training data of the reference intention recognition model, wherein the model training data comprises at least a plurality of preset intentions and reference sample data and reference model parameters respectively corresponding to the plurality of preset intentions;
obtaining third-party sample data that matches the preset skill category; and
training the reference intention recognition model by using the model training data and the third-party sample data, to generate the third-party intention recognition model.

15. The apparatus according to claim 14, wherein the obtaining third-party sample data that matches the preset skill category comprises:
obtaining a third-party intention added by a third-party user and third-party sample data corresponding to the third-party intention, wherein the third-party intention matches the preset skill category; or
obtaining sample data added by a third-party user on the basis of the reference sample data corresponding to the preset intention.

16. The apparatus according to claim 14, wherein the training the reference intention recognition model by using the model training data and the third-party sample data, to generate the third-party intention recognition model comprises:
obtaining a user identifier of a third-party user;
associating the user identifier with the third-party sample data; and
training the reference intention recognition model by using the model training data and the third-party sample data associated with the user identifier, to generate the third-party intention recognition model.

17. The apparatus according to claim 16, wherein the user identifier comprises at least one of a brand name, an app name, and a product name corresponding to the third-party user.

18. The apparatus according to claim 13, wherein the determining an intention of the speech text based on a confidence level of an intention in the first intention set and a confidence level of an intention in the second intention set comprises:
using an intention with a highest confidence level in the second intention set as the intention of the speech text when it is determined that confidence levels of all intentions comprised in the first intention set are less than or equal to a first preset threshold, and confidence levels of all intentions comprised in the second intention set are greater than a second preset threshold;
using an intention with a highest confidence level in the first intention set as the intention of the speech text when it is determined that confidence levels of all intentions comprised in the second intention set are less than or equal to a second preset threshold; or
using an intention with a highest confidence level in the first intention set and the second intention set as the intention of the speech text when it is determined that confidence levels of all intentions comprised in the first intention set are greater than or equal to a first preset threshold, and confidence levels of all intentions comprised in the second intention set are greater than a second preset threshold.

19. The apparatus according to claim 18, wherein each of the first preset threshold and the second preset threshold is set to match a corresponding skill category.

20. An apparatus for generating an intention recognition model, comprising:
a skill category obtaining module, configured to obtain a preset skill category selected by a third-party user;
a model obtaining module, configured to obtain a reference intention recognition model corresponding to the preset skill category and model training data of the reference intention recognition model;
a sample obtaining module, configured to obtain third-party sample data that is from the third-party user and that matches the preset skill category; and
a model generation module, configured to train the reference intention recognition model by using the model training data and the third-party sample data, to generate a third-party intention recognition model, wherein the third-party intention recognition model is an intention recognition model corresponding to the third-party user.

21. The apparatus according to claim 20, wherein the obtaining third-party sample data that matches the preset skill category comprises:
obtaining a third-party intention added by the third-party user and third-party sample data corresponding to the third-party intention, wherein the third-party intention matches the preset skill category; or
obtaining sample data added by the third-party user on the basis of reference sample data corresponding to a preset intention.

22. The apparatus according to claim 20, wherein the training the reference intention recognition model by using the model training data and the third-party sample data, to generate a third-party intention recognition model comprises:
obtaining a user identifier of the third-party user;
associating the user identifier with the third-party sample data; and
training the reference intention recognition model by using the model training data and the third-party sample data associated with the user identifier, to generate the third-party intention recognition model.

23. The apparatus according to claim 22, wherein the user identifier comprises at least one of a brand name, an app name, and a product name corresponding to the third-party user.

24. The apparatus according to claim 20, further comprising:
a speech recognition module, configured to obtain a speech text corresponding to a speech signal; and
a dialog management module, configured to: separately input the speech text to at least one reference intention recognition model and at least one third-party intention recognition model, output a first intention set by using the at least one reference intention recognition model, and output a second intention set by using the at least one third-party intention recognition model; and configured to determine an intention of the speech text based on a confidence level of an intention in the first intention set and a confidence level of an intention in the second intention set.

25. A terminal device, comprising:
a processor; and
a memory, configured to store instructions that can be executed by the processor, wherein
the processor is configured to execute the instructions to enable the terminal device to implement the method according to any one of claims 1 to 7 or the method according to any one of claims 8 to 12.

26. A nonvolatile computer-readable storage medium, wherein the nonvolatile computer-readable storage medium stores computer program instructions, and when the computer program instructions are executed by a processor, the method according to any one of claims 1 to 7 or the method according to any one of claims 8 to 12 is implemented.

27. A computer program product, comprising computer-readable code or a nonvolatile computer-readable storage medium that carries computer-readable code, wherein when the computer-readable code is run in a processor in an electronic device, the processor in the electronic device implements the method according to any one of claims 1 to 7 or the method according to any one of claims 8 to 12.
